Europäisches Patentamt

(19) European Patent Office

Office européen des brevets

(11) Publication number: **0 014 553**
**B1**

(12) **EUROPEAN PATENT SPECIFICATION**

(45) Date of publication of patent specification: **05.05.82**

(51) Int. Cl.³: **C 01 F 17/00 //C09K11/46**

(21) Application number: **80300242.7**

(22) Date of filing: **25.01.80**

(54) Process for purifying rare-earth compositions.

(30) Priority: **25.01.79 US 6691**

(43) Date of publication of application:
**20.08.80 Bulletin 80/17**

(45) Publication of the grant of the patent:
**05.05.82 Bulletin 82/18**

(84) Designated Contracting States:
**BE DE FR GB NL**

(56) References cited:
**US - A - 2 425 573**
**US - A - 4 051 223**

**JOURNAL DE CHIMIE PHYSIQUE, vol. 27, 1930**
**Paris**
**P. CURIE "Sur l'actinium" pages 1 to 8**

(73) Proprietor: **EASTMAN KODAK COMPANY**
**343 State Street**
**Rochester, New York 14650 (US)**

(72) Inventor: **White, Weimar Weatherly**
**Kodak Park**
**Rochester, New York (US)**
Inventor: **Kimble, Laurie Anne**
**148, Huffer Road**
**Hilton New York 14468 (US)**

(74) Representative: **Trangmar, Leigh Alan et al,**
**66 The Avenue**
**Beckenham Kent (GB)**

# 0 014 553

## Process for purifying rare-earth compositions

This invention relates to the purification of compositions containing rare-earth elements. More particularly, it relates to a process for removing trace quantities of radioactive impurities from compositions containing rare-earth elements.

Phosphor materials comprising a rare-earth element as a host ion are well-known in the art. These phosphors are typically activated by the presence of minor amounts of other rare-earth elements. The rare-earth elements are also referred to as lanthanides and are characterized by having atomic numbers from 57—71 inclusive. Two rare-earth elements, namely, lanthanum and gadolinium, are particularly useful as host ions in phosphor materials. An important use of these lanthanum and gadolinium phosphor materials is in X-ray intensifying screens. A layer of the phosphor material serves to convert an X-ray image pattern into an image pattern which can be recorded on a photographic film positioned adjacent the X-ray intensifying screen. One particularly useful phosphor material is lanthanum oxysulphide activated with terbium.

It has been observed that rare-earth phosphor materials emit spontaneous radiation which can interfere with their use in X-ray intensifying screens because photographic film is sensitive to such radiation. When developed, areas of the film that are exposed by said spontaneous radiation become high-density spots which degrade the quality of the recorded X-ray image. This spontaneous radiation is caused principally by radioactive impurities in the phosphor. These impurities are trace-amounts of radioactive elements which occur naturally in rare-earth ores. The severity of the image degradation is a function of the concentration of the radioactive impurities and the period of time for which the photographic film is in contact with the X-ray intensifying screen.

Ores containing significant amounts of the rare-earth elements, such as monazite ore and bastnaesite ore, also typically contain radioactive elements such as uranium, actinium and the radioactive members of the uranium and actinium radioactive decay chains. Because uranium and most other radioactive impurities have distinctly different chemical properties from those of the rare-earth elements, it is possible to separate readily most of these impurities from the rare-earth elements. However, small amounts of radioactive impurities typically remain. The most difficult impurities to remove have proved to be actinium (227) and the members of its radioactive decay chain. This is because the chemical properties of actinium are very similar to the chemical properties of the rare-earth elements, particularly lanthanum. Therefore, chemical separation techniques which are adequate to separate other radioactive impurities, such as uranium, from the rare-earth elements, will typically not achieve satisfactory separation of actinium from the rare-earth elements. In order to eliminate substantially the spotting problem discussed above, it has been found necessary to reduce the level of radioactive impurities in the rare-earth phosphor to less than 1 part in $10^{18}$. Prior-art methods for separating actinium from the rare-earth elements such as those discussed below, are inadequate to provide this level of purity.

Several methods have been devised for obtaining separations of actinium from the rare-earth materials. In one of the earliest attempts, a material enriched in actinium was obtained by a process including fractional precipitation of lanthanum from a solution, using oxalic acid. The unprecipitated material was shown to have an increased proportion of actinium which, of course, means that the precipitated rare-earth salt contained less actinium (Curie, *J. Chim. Phys.*, vol. 27, pp. 1—8 (1930)). Another purification process is described in U.S. Patent, US—A 2,425,573 issued to Soddy. In this process, the rare-earth sulphates are precipitated in the presence of phosphoric acid, leaving thorium behind in the filtrate. Thorium is one step away from actinium in the actinium decay chain. Again, the precipitated rare-earth sulfate presumably contained less unwanted impurity. While these processes and others have been useful in purifying rare-earth materials to a certain extent, none of these processes can economically produce rare-earth materials which are pure enough for use as phosphors in X-ray screens. There is a continuing need for an economical and efficient process for removing the radioactive impurities from rare-earth materials.

According to this invention rare-earth compositions can be highly purified by precipitation of a portion of the rare-earth material as the sulphate if other precipitates are also formed at the same time. More particularly, the present invention provides a process for purifying a composition comprising at least one rare-earth element and radioactive impurities, the process comprising the steps of:

(1) forming an aqueous solution of the composition to be purified having a pH between 4.0 and 6.5;
(2) precipitating the radioactive impurities along with a small portion of the rare-earth material, while maintaining the pH between 4.0 and 6.5, by adding to the solution in an amount sufficient to effect such precipitation of:

    (i) a soluble barium or strontium salt;
    (ii) a soluble aluminium, magnesium or zirconium salt;
    (iii) a selective precipitating agent which is
        (a) a nitrogen-containing heterocyclic ring compound having an hydroxyl group located in a

2

$\beta$ or $\gamma$ position with respect to a nitrogen atom in the heterocyclic ring or
(b) an ammonium salt of an N-nitrosophenylhydroxylamine; and
(iv) a sulphate ion-providing salt;
(3) separating the solution from the precipitate; and
(4) recovering purified rare-earth material from the solution.

The selective precipitating agent, in combination with the other additives, is critical to the process of the present invention. While the method by which the selective precipitating agent operates is not completely understood, it is believed that the rare-earth ions, along with the aluminium, magnesium or zirconium ions, form a complex precipitate with the selective precipitating agent. This precipitate is believed to occlude impurities which also precipitate from the solution.

As with any fractional precipitation process, the exact purity of the end product depends upon the molar percentage of the material which is precipitated and upon the number of precipitations. The process of the present invention is able to achieve high purities by precipitating only a small fraction of the rare-earth material from the solution and using only one or two precipitation steps. For example, if the starting rare-earth composition contains 1 part of radioactive impurities in $10^{12}$, compositions having impurities in the amount of 1 part in $10^{18}$ can be prepared by the process of the present invention by precipitating about 5—15 mole percent of the rare-earth material from the initial solution and repeating the precipitation step no more than twice. The process of the present invention therefore provides an economical and efficient method for purifying rare-earth materials.

The first step in the process of the present invention is the formation of an aqueous solution of the rare-earth composition to be purified. As is known in the art, the solution can be made by dissolving the rare-earth composition in an acidic solution. If the rare-earth composition is not soluble in the acidic solution, it can be converted to one that is acid-soluble. For example, a lanthanum-containing rare-earth composition can be heated in an oxygen atmosphere at high temperature in order to convert all of the lanthanum in the composition to lanthanum oxide, which is soluble in acid solutions. Common inorganic acids, such as hydrochloric acid, nitric acid, phosphoric acid and the like, are preferred for forming the acidic solution. After the rare-earth composition is dissolved in the acid, the pH of the solution is adjusted to between about 4.0 to 6.5, if necessary. The optimum pH for practicing the invention will depend upon the particular rare-earth composition being purified, the solution concentration ranges, and the like. The preferred pH range of the solution is between 5.0 and 6.0. One convenient way of maintaining the pH within the desired range is the addition of a buffering agent such as an ammonium acetate-ammonium hydroxide solution. After the acidic solution is formed, it is usually desirable to filter out any insoluble material which may be present. This step is not critical and the rare-earth composition can be purified without this filtering step.

For economic reasons, it is generally desirable to dissolve sufficient rare-earth compositions to form a solution that is about 0.88 molar in the rare-earth salt. However, useful separations can be achieved over a wide range of concentration of the rare-earth salt in the solution. Useful concentrations range between 0.25 molar and 1.25 molar.

In the second step of the process of the present invention, a portion of the rare-earth ions and the radioactive impurities are precipitated by adding to the solution (i) a soluble barium or strontium salt, (ii) a soluble aluminium, magnesium or zirconium salt, (iii) a selective precipitating agent, and (iv) a sulphate ion-providing salt. This precipitation phase is carried out while maintaining the pH of the solution between 4.0 and 6.5, preferably between 5.0 and 6.0. While the precipitation can be carried out by adding components (i) — (iv) in any order, this precipitating phase is preferably carried out in the following sequence of steps. First, the soluble barium or strontium salt is added to the rare-earth-containing solution. A solution of the soluble aluminium, magnesium or zirconium salt is simultaneously added with a solution of the selective precipitation agent. A precipitate is then caused to form by the addition of sulphate ions by adding to the solution a sulfate salt such as ammonium sulphate.

The amount of each component, (i) to (iv), which is to be added to the solution of the rare-earth composition depends upon the exact nature of the rare-earth composition being purified, and more particularly upon the initial concentration of the radioactive impurities contained therein. The amount of each additive, given below, illustrates a useful range of the molar ratio of the additive to the rare-earth composition when the concentration of radioactive impurities is about 1 part in $10^{12}$ parts of rare-earth element. This concentration is typical in a relatively rare-earth ore. Addition of these components at the indicated molar ratios results in the precipitation of about 5 to 15 mole percent of the rare-earth element from the solution. It will be understood also that, like the concentration of the rare-earth composition in the solution, the actual amount of components (i) to (iv) which are added in the precipitation phase of the process is dependent on economic factors. The optimum amount of each of these components can be determined easily by routine experimentation using the present disclosure as a guide.

Preferably, the first component (i) to be added in the precipitation phase of the process of the present invention is a soluble barium or strontium salt. The salt can be added either directly or in the form of a solution. Useful soluble barium or strontium salts include any soluble salts whose anions do not interfere with the final product. Illustrative salts include halides such as barium chloride, strontium chloride, barium iodide and strontium iodide and hydrates such as barium chloride dihydrate. The

**0 014 553**

soluble barium or strontium salt is preferably added to the solution of the rare-earth salt in a ratio of from 0.002 to 0.01 mole/mole of rare-earth salt. The preferred ratio of barium or strontium salt is from 0.003 to 0.005 mole/mole of rare-earth salt. In any event, the concentration of the barium or strontium salt should be sufficiently high to ensure that a major portion of the barium or strontium will be precipitated as the sulphate upon the subsequent addition of sulphate ion and selective precipitating agent to the solution containing the dissolved rare-earth compound. While the function of the barium or strontium salt in the precipitation is not completely understood, it is believed that the barium or strontium sulphate which forms in the precipitation acts as a seed which promotes the precipitation of the radioactive impurity, radium. Alternatively, it may be that actinium is adsorbed to the surface of the precipitating barium sulphate (see, for example, McLane and Peterson, *The Transuranium Elements*, National Nuclear Energy Series, Vol 14B (1949), pages 1371—1380).

The next component (ii) to be added to the solution in the precipitating phase of the present invention is a soluble aluminium, magnesium or zirconium salt. The soluble aluminium, magnesium or zirconium salt is preferably added at the same time, i.e., substantially simultaneously, with the selective precipitating agent. Any suitable soluble aluminium, magnesium or zirconium salt can be used. For example, $Al_2(SO_4)_3 \cdot 18H_2O$, $AlCl_3 \cdot 6H_2O$, $AlBr_3 \cdot 6H_2O$, $MgSO_4$, $MgCl_2$, $MgBr_2$, $MgI_2$ and $Zr(SO_4)_2$ can be used as the source of aluminium, magnesium or zirconium in this step. It is preferred, however, that aluminium is added as aluminium sulphate. Aluminium sulphate is both a soluble aluminium salt meeting the requirements of component (ii) and a sulphate ion-providing salt meeting the requirements of additive component (iv). As with the barium or strontium salt, the aluminium, magnesium or zirconium salt can be added either directly or in the form of a solution. The aluminium, magnesium or zirconium salt is preferably added in a ratio of from 0.0005 to 0.002 mole/mole of rare-earth salt. The preferred ratio of aluminium, magnesium salt or zirconium is from 0.0007 to 0.001 mole/mole of rare-earth salt. Again, the exact function of the aluminium, magnesium or zirconium in the precipitation step is not completely understood; however, it is believed that these metal ions form complexes with the selective precipitating agent, which complexes entrap or carry with them small amounts of precipitating radioactive impurity which might otherwise stay suspended in the solution.

The selective precipitating agent, (iii) in combination with the other components, is critical to the process of the present invention. Useful selective precipitating agents are compounds or salts selected from the group consisting of (a) nitrogen-containing heterocyclic ring compounds having an hydroxyl group located in a $\beta$ or $\gamma$ position with respect to a nitrogen atom in the heterocyclic ring and (b) ammonium salts of N-nitrosophenylhydroxylamines. Illustrative selective precipitating agents which are useful in the process of the present invention include:

8-hydroxyquinoline
8-hydroxyquinaldine
8-hydroxy-7-iodo-5-quinolinesulphuric acid quinolinequinone-(5,8)-[8-hydroxyquinolyl-5-imide]
N-ethyl-8-hydroxytetrahydroquinoline hydrochloride
5-hydroxyquinoline-8-carboxylic acid
4-hydroxybenzothiazole
2-(o-hydroxyphenyl)benzoxazole
alizarin blue
5,8-dihydroxyquinoxaline
cupferron (the ammonium salt of N-nitrosophenylhydroxylamine)

The selective precipitating agent is conveniently added in the form of a solution. The selective precipitating agent is preferably added in a ratio of from 0.01 to 0.03 mole/mole of rare-earth salt. The preferred ratio is from 0.01 to 0.02 mole/mole of rare-earth salt. As with the other components in this complex precipitation phase, the exact function of the selective precipitating agent is not completely understood. It is believed that the selective precipitating agent forms a complex precipitate with a variety of the cations in the solution. It is believed that, under the conditions in which the process of the present invention is carried out, the selective precipitating agent forms a complex with the rare-earth ions, the aluminium, magnesium or zirconium ions, the barium or strontium ions, as well as with the ions of a number of impurities. These complexes with the selective precipitating agent are believed to carry with them precipitated impurities which would otherwise be too fine to coalesce and be removed from the solution. While this is offered as an explanation of the function of the selective precipitating agent and other of the components added in the precipitation phase, it is a hypothesis only, and applicants do not wish to be bound to any particular theory.

The final component (iv) to be added in the precipitation phase of the process of the present invention is a salt which provides sulphate ion. The sulphate ion is preferably added after the addition of the soluble aluminium salt (ii) and the selective precipitating agent (iii). The sulphate ion-providing salt is added at this time in order to form the precipitate containing a portion of the rare-earth ions in the solution and the radioactive impurities. A wide variety of sulphate salts may be used as the source of sulphate ion. Illustrative sulphate salts are ammonium sulphate, sodium sulphate, potassium sulphate and lithium sulphate. As discussed above in relation to the soluble aluminium, magnesium or zironium

4

salt, aluminium sulphate can also be used as at least part of the source of sulphate ion. The sulphate ion-providing salt can be added either directly or in the form of a solution. The sulphate ion is added so that the total sulphate from this and previous additions is preferably in a ratio of from 0.03 to 0.15 mole/mole of rare-earth salt. The preferred ratio is from 0.055 to 0.075 mole/mole of rare-earth salt.

The precipitation phase of the process of the present invention is completed using method well-known in the art. For example, in some instances it may be desirable to heat the solution containing the precipitate to moderate temperatures, for instance, about 50°C, in order to promote the coalescence of the precipitate. After the precipitate is formed, it is separated from the solution, also using techniques which are well-known in the art. The precipitate can be allowed to settle, can be filtered, or can be centrifuged from the solution.

Depending upon the desired purity of the final rare-earth material, it can be recovered from the solution or the precipitation phase can be repeated. In each precipitation, it is desirable to precipitate about 5—15 mole percent of the rare-earth material remaining in the solution. It is preferred to precipitate amounts of rare-earth material on the upper end of this range in earlier precipitations and amounts on the lower end of this range in later precipitations. This provides for the most economical purification. When a solution containing rare-earth material of sufficient purification is obtained, the rare-earth material is recovered from the solution and converted to a desired form.

The purified rare-earth material can be recovered from the solution using method which are well-known in the art. For example, the solution containing the rare-earth salt can be first further acidified using hydrochloric acid. If an activated phosphor is to be the end product, a salt of an activator element such as terbium can be added to the solution at this point. Adding the activator salt at this point ensures a uniformly dispersed activator in the phosphor which will later be formed from the recovered, purified rare-earth material. The solution is then heated while adding a stoichiometric quantity of oxalic acid to the solution to precipitate the rare-earth ions. There is no stoichiometric excess of oxalate ion to rare-earth ion at the end of the precipitation. The precipitate is recovered from the solution, washed, collected, dried and heated in air, using known methods, to convert it to the rare-earth oxide. Preparation of the rare-earth phosphors from the oxides can be accomplished, also using well-known methods.

The degree of purification achieved for a particular rare-earth composition and a particular set of processing parameters can be determined by monitoring the radioactivity of the purified rare-earth material over a period of time. The radioactivity must be monitored over time because the radioactivity of the purified rare-earth material may vary in a somewhat unpredictable manner immediately after practicing the process of the present invention. For practical purposes, the equilibrium state is reached in about 100 days. The reason for this unpredictable variability immediately after processing appears to be that the purification process of the present invention disturbs the equilibrium which ordinarily exists in the relative proportions of the elements in the radioactive decay chain.

In the following examples, the removal of radioactive impurities from the rare-earth material was measured using a gamma($\gamma$)-ray counting system. For each sample, the ratio of the counts for a particular radioactive impurity in the sample to the counts for lanthanum (138) in the sample was determined. Lanthanum (138) is a naturally occurring radioactive isotope of lanthanum. Unfortunately, the radioactive impurity of primary concern, actinium (227), given very low counts compared with other radioactive members of its decay chain. The effectiveness of the removal of actinium (227) must therefore be determined by measuring the removal of a member of its decay chain after the sample has come to equilibrium.

The $\gamma$-ray counting system used in the following examples included a lead-shielded detector, an amplifier, an analyzer, a printer and a recorder. The detector used was a 60-cc Canberra Model 7219 (trade mark) lithium-doped germanium $\gamma$-ray detector. Signals from the detector were routed through an amplifier, then fed into a multichannel analyzer where the data could be stored as a pulse height spectrum. A printer was used for data printout and, by connection to a X—Y recorder, graphical representations of the data could be made.

In the following examples, the starting material was lanthanum oxide. Samples were tested for radioactivity before processing and at various intervals thereafter, as indicated in the examples and tables. For testing, equal-weight samples were placed in polyethylene bags and sealed. The bags were placed in a sample holder directly in contact with the front face of the detector, and the $\gamma$-rays emitted were counted for several hours.

Radioactive emissions from the rare-earth oxides have been found to correlate well with the number of high-density spots which can be expected using X-ray intensifying screens made from phosphors which in turn are made from these rare-earth oxides. Thus, it has been found that, when the radioactive emissions from a particular sample of lanthanum oxide is low, a terbium-activated lanthanum oxysulphide phosphor made from this lanthanum oxide can be used in an intensifying screen which exhibits very low incidence of high-density spots.

The following examples illustrate the practice of the invention.

## Example 1

Lanthanum oxide (200 g) was dissolved, with stirring, in a solution of 1 litre of water and 300 ml

# 0014553

of 37.5% by weight hydrochloric acid. Ammonium acetate (78.0 g) and sufficient ammonium hydroxide were added to adjust the pH of the solution to 5.5. One gram of barium chloride dihydrate (i) was then dissolved in the solution followed by the sequential addition of 10.0 ml of a 0.095 molar aqueous aluminium sulphate (ii) and (iv) solution; 50 ml of an ethyl alcohol solution containing 2.0 g of 8-hydroxyquinoline (iii); and 100 ml of an aqueous solution containing 10 g of ammonium sulphate (iv).

The resulting suspension was heated to 50°C and stirred at that temperature for 0.5 hours to coalesce the precipitate. After additional stirring to ensure complete precipitation, the precipitate was permitted to settle for 16 hours at room temperature. The supernatent solution containing a purified lanthanum was then separated from the precipitate by filtering through a 0.45 $\mu$m HAWP Millipore filter (TM).

Barium chloride dihydrate (1.0 g) was added to the filtrate solution, and the precipitation process steps (ii) to (iv) described above were repeated.

The filtrate solution containing the twice-purified lanthanum was acidified, using 200 ml of hydrochloric acid (37.5% by weight). Then a stoichiometric amount of oxalic acid in 1000 ml of water was slowly added to the heated lanthanum solution (approximately 70°C), resulting in a lanthanum oxalate precipitate. The precipitate was recovered by filtering the suspension using a sintered-glass crucible of coarse porosity. The precipitate was washed with 3 litres of distilled water, dried and then heated for 1 hour in air at 900°C to convert it to 150 g of lanthanum oxide (75% yield).

The purified lanthanum oxide was compared with the original untreated starting material for the presence of radioactive impurities, by the methods previously described. The results, shown in Table 1, indicate that the process of the invention achieves significant reduction of radioactive impurities in rare-earth compositions.

## Table 1

| | Sample | Isotope and Energy Emission Value Ratio of Isotope/Lanthanum (138) | | | | | |
| | | $211_{Bi}$ 351 KEV | % of orig. level | $219_{Rn}$ and $223_{Ra}$ 272 KEV | % of orig. level | $227_{Th}$ 256 KEV | % of orig. level |
|---|---|---|---|---|---|---|---|
| 1. $La_2O_3$ | untreated | .057 | | .12 | | .027 | |
| 2. $La_2O_3$ | purified initially after 12 days | < .006 | < (11%) | < .009 | < (8%) | < .006 | < (22%) |
| | after 24 days | < .007 | < (12%) | < .020 | < (17%) | < .008 | < (30%) |
| | at equilibrium (after 120 days) | .026 | (46%) | .036 | (30%) | < .009 | < (33%) |

## Example 2

In a solution containing 1250 ml of water and 165 ml of concentrated hydrochloric acid solution (37.5% by weight) were dissolved 100 g of lanthanum oxide. In the solution was dissolved 60 g of ammonium acetate, and sufficient ammonium hydroxide was added to adjust the pH of the solution to 5.5. To the solution was added 1.0 g of barium chloride dihydrate (i).

The following solutions were then successively added to the solution of lanthanum chloride: 50 ml of an aqueous solution containing 5.0 g of ammonium sulphate (iv); 10.0 ml of a 0.095 molar aluminium sulphate (ii) and (iv) solution; 25 ml of an aqueous solution containing 0.6 g of zirconium sulphate (ii) and (iv). Then 75 ml of an ethyl alcohol solution containing 3.0 g of 8-hydroxyquinoline (iii) and 0.75 g of cupferron (iii) were added to the solution while stirring.

The resulting suspension was heated to approximately 50°C for an hour to cause the precipitate to coalesce. After settling of the precipitate, the supernatant solution containing purified lanthanum chloride was separated from the precipitate by filtering through a 0.45 $\mu$m Millipore filter (trade mark).

An aqueous solution containing 115.5 g of oxalic acid was added to the filtrate solution to precipitate purified lanthanum oxalate which was separated from the solution by filtering through a sintered-glass crucible of coarse porosity. The precipitate was washed with 3 litres of distilled water, dried, and then heated in air at 900°C to convert it to 95 g of lanthanum oxide (95% yield).

The purified lanthanum oxide was compared with the original untreated starting material for the presence of radioactive impurities, by the methods previously described. Again the results shown in Table 2, indicate that the process of the invention achieves significant reductions of radioactive impurities in rare-earth compositions.

6

# 0014 553

Table 2

Isotope and Energy Emission Value Ratio
of Isotope/Lanthanum (138)

| Sample | $211_{Bi}$ 351 KEV | $219_{Rn}$ and $223_{Ra}$ 272 KEV | $227_{Th}$ 256 KEV |
|---|---|---|---|
| 1. $La_2O_3$ untreated | 0.04 | 0.08 | $\leq 0.02$ |
| 2. $La_2O_3$, purified at equilibrium (106 days) | $\leq 0.015$ | 0.019 | $\leq 0.009$ |

**Claims**

1. A process for purifying a composition comprising at least one rare-earth element and radioactive impurities, said process comprising the steps of:

(1) forming an aqueous solution of said composition having a pH between 4.0 and 6.5;
(2) precipitating the radioactive impurities along with a small portion of said rare-earth material while maintaining the pH between 4.0 and 6.5, by adding to said solution in an amount sufficient to effect such precipitation:
    (i) a soluble barium or strontium salt;
    (ii) a soluble aluminium, magnesium or zirconium salt;
    (iii) a selective precipitation agent which is;
        (a) a nitrogen-containing heterocyclic ring compound having an hydroxyl group located in a $\beta$ or $\gamma$ position with respect to a nitrogen atom in the heterocyclic ring or
        (b) an ammonium salt of an N-nitrosophenyl-hydroxylamine; and
    (iv) a sulphate ion-providing salt;
(3) separating the solution from the precipitate; and
(4) recovering purified rare-earth material from the solution.

2. A process according to Claim 1 wherein said composition contains lanthanum.
3. A process according to Claim 1 or 2 wherein said solution is maintained at a pH between 5.0 and 6.0.
4. A process according to any of the preceding Claims wherein said selective precipitating agent is an 8-hydroxyquinoline derivative.
5. A process according to Claim 4 wherein said selective precipitating agent is 8-hydroxyquinoline.
6. A process according to any of the preceding Claims wherein said solution is between 0.25 and 1.25 molar said rare-earth material and:
    (i) said soluble barium or strontium salt is present from 0.002 to 0.01 mole/mole of rare-earth salt;
    (ii) said soluble aluminium salt is present from 0.0005 to 0.002 mole/mole of rare-earth salt;
    (iii) said sulphate ion-providing salt is present from 0.03 to 0.15 mole/mole of rare-earth salt; and
    (iv) said selective precipitating agent is present from 0.01 to 0.03 mole/mole of rare-earth salt.
7. A process according to Claim 1 for purifying a composition comprising lanthanum and radioactive impurities of the actinium decay chain, said process comprising the steps of:

(1) forming a first aqueous solution of said composition by dissolving said composition in a hydrochloric acid solution so as to form a solution which is between 0.25 and 1.25 molar lanthanum chloride;
(2) adjusting the pH of said first solution by adding ammonium acetate and sufficient ammonium hydroxide to bring the pH to between 5.0 and 6.0;
(3) adding barium chloride dihydrate at a ratio of from 0.003 to 0.005 moles/mole of lanthanum chloride in said first solution;
(4) simultaneously adding:

    (i) a 0.095 molar solution of aluminium sulphate so that the ratio of addition is from 0.0007 to 0.001 moles/mole of lanthanum chloride in said first solution and
    (ii) a 0.275 molar solution of 8-hydroxyquinoline so that the ratio of addition is from 0.01 to 0.02 moles/mole of lanthanum chloride in said first solution;

(5) adding a 0.757 molar solution of ammonium sulphate so that the ratio of addition is from 0.055 to

7

**0014553**

0.075 moles/mole of lanthanum ions in said first solution, thereby precipitating a portion of said lanthanum and said impurities;

(6) coalescing and separating the resulting precipitate from said solution;

(7) repeating steps (3)—(6); and

(8) recovering a purified lanthanum compound from said solution.

**Revendications**

1. Procédé de purification d'une composition comprenant au moins un élément des terres rares et des impuretés radioactives, ce procédé consistant:

(1) à former une solution aqueuse de ladite composition ayant un pH compris entre 4,0 et 6,5,

(2) à précipiter les impuretés radioactives en même temps qu'une petite partie de l'élément des terres rares, le pH étant maintenu entre 4,0 et 6,5, par addition, à la solution, d'une quantité suffisante, pour obtenir cette précipitation:
  (i) d'un sel de baryum ou de strontium soluble,
  (ii) d'un sel d'aluminium, de magnésium ou de zirconium soluble,
  (iii) d'un agent de précipitation sélectif qui est:
    a) un composé comprenant un noyau hétérocyclique azoté, ayant un groupe hydroxyle en position $\beta$ ou $\gamma$ par rapport à un atome d'azote du noyau hétérocyclique ou
    b) un sel d'ammonium d'une N-nitrosophényl-hydroxylamine et,
  (iv) un sel fournissant un ion sulfate,

(3) à séparer la solution du précipité et,

(4) à récupérer l'élément de terre rare purifié de la solution.

2. Procédé conforme à la revendication 1, caractérisé en ce que la composition contient du lanthane.

3. Procédé conforme à l'une quelconque des revendications 1 ou 2, caractérisé en ce que la solution est maintenue à un pH compris entre 5,0 et 6,0.

4. Procédé conforme à l'une quelconque des revendications 1 à 3, caractérisé en ce que l'agent de précipitation sélectif est un dérivé de la 8-hydroxyquinoléine.

5. Procédé conforme à la revendication 4, caractérisé en ce que l'agent de précipitation sélectif est la 8-hydroxyquinoléine.

6. Procédé conform à l'une quelconque des revendications 1 à 5, caractérisé en ce que la concentration molaire de la solution en composé de terre rare est comprise entre 0,25 et 1,25 M et,
  (i) le sel de baryum ou de strontium soluble est présent à raison de 0,002 à 0,01 mole par mole de sel de terre rare,
  (ii) le sel d'aluminium soluble est présent à raison de 0,0005 à 0,002 mole par mole de sel de terre rare,
  (iii) le sel fournissant l'ion sulfate est présent à raison de 0,03 à 0,15 mole par mole de sel de terre rare et,
  (iv) l'agent de précipitation sélectif est présent à raison de 0,01 à 0,03 mole par mole de sel de terre rare.

7. Procédé conforme à la revendication 1, pour purifier une composition comprenant du lanthane et des impuretés radioactives de la désintégration de l'actinium, le procédé consistant:

(1) à former une première solution aqueuse de la composition en dissolvant cette dernière dans une solution d'acide chlorhydrique pour obtenir une solution contenant de 0,25 à 1,25 M de chlorure de lanthane,

(2) à ajuster le pH de cette première solution par addition d'acétate d'ammonium et d'hydroxyde d'ammonium en quantité suffisante pour avoir un pH compris entre 5,0 et 6,0,

(3) à ajouter du chlorure de baryum dihydraté à raison de 0,003 à 0,005 mole par mole de chlorure de lanthane dans cette première solution,

(4) à ajouter simultanément

  (i) une solution 0,095 M de sulfate d'aluminium pour obtenir de 0,0007 à 0,001 mole par mole de chlorure de lanthane dans cette première solution et,
  (ii) une solution C,275 M de 8-hydroxyquinoléine pour obtenir de 0,01 à 0,02 mole par mole de chlorure de lanthane dans cette première solution,

(5) à ajouter une solution 0,757 M de sulfate d'ammonium pour obtenir de 0,055 à 0,075 mole par mole d'ions lanthane dans cette première solution, ceci pour précipiter une partie du lanthane et les impuretés,

(6) à précipiter par coalescence et à séparer le précipité obtenu de la solution,

(7) à répéter les étapes (3) à (6) et

8

**0 014 553**

(8) à récupérer de cette solution un composé du lanthane purifié.

**Patentansprüche**

1. Verfahren zur Reinigung von mindestens ein Seltenes Erdelement sowie radioaktive Verunreinigungen enthaltenden Massen, gekennzeichnet durch die folgenden Verfahrensstufen:

(1) Herstellung einer wäßrigen Lösung der Masse mit einem pH-Wert von 4,0 bis 6,5;
(2) Ausfällung der radioaktiven Verunreinigungen mit einem kleinen Anteil des Seltenen Erdmaterials unter Aufrechterhalten des pH-Wertes zwischen 4,0 und 6,5 durch Zusatz einer für die Ausfällung ausreichenden Menge von
   (i) einem löslichen Barium- oder Strontiumsalz;
   (ii) einem löslichen Aluminium-, Magnesium- oder Zirkoniumsalz;
   (iii) einem selektiven Fällungsmittel aus:
      (a) einer Stickstoff enthaltend heterocyclischen Ringverbindung mit einer Hydroxylgruppe in $\beta$- oder $\gamma$-Stellung bezüglich eines Stickstoffatomes im heterocyclischen Ring oder
      (b) einem Ammoniumsalz eines N-Nitrosophenyl-hydroxylamines und
   (iv) einem Sulfationen liefernden Salz zu der Lösung;
(3) Trennung der Lösung vom Niederschlag und Isolierung des gereinigten Seltenen Erdmaterials von der Lösung.

2. Verfahren nach Anspruch 1, dadurch gekennzeichnet, daß die Masse Lanthan enthält.

3. Verfahren nach Ansprüchen 1 oder 2, dadurch gekennzeichnet, daß man die Lösung auf einem pH-Wert zwischen 5,0 und 6,0 hält.

4. Verfahren nach einem der vorstehenden Ansprüche, dadurch gekennzeichnet, daß das selektive Fällungsmittel ein 8-Hydroxychinolinderivat ist.

5. Verfahren nach Anspruch 4, dadurch gekennzeichnet, daß das selektive Fällungsmittel 8-Hydroxychinolin ist.

6. Verfahren nach einem der vorstehenden Ansprüche, dadurch gekennzeichnet, daß die Lösung bezüglich des Seltenen Erdmaterials zwischen 0,25 und 1,25 molar ist und daß:
   (i) das lösliche Barium- oder Strontiumsalz in einer Konzentration von 0,002 bis 0,01 Molen/Mol Seltenes Erdsalz,
   (ii) das lösliche Aluminiumsalz in einer Konzentration von 0,0005 bis 0,002 Molen/Mol Seltenes Erdsalz,
   (iii) das Sulfationen liefernde Salz in einer Konzentration von 0,03 bis 0,15 Molen/Mol Seltenes Erdsalz und
   (iv) das selektive Fällungsmittel in einer Konzentration von 0,01 bis 0,03 Molen/Mol Seltenes Erdsalz vorliegen.

7. Verfahren nach Anspruch 1 zum Reinigen einer Masse mit Lantham und radioaktiven Verunreinigungen der Aktiniumzerfallsreihe, gekennzeichnet durch folgende Verfahrensstufen:
(1) Herstellung einer ersten wäßrigen Lösung der Masse durch Lösen derselben in einer Chlorwasserstoffsäurelösung unter Bildung einer Lösung, die bezüglich Lanthanchlorid zwischen 0,25 und 1,25 molar ist;
(2) Einstellung des pH-Wertes der ersten Lösung durch Zusatz von Ammoniumacetat und einer ausreichenden Menge an Ammoniumhydroxid auf zwischen 5,0 und 6,0;
(3) Zusatz von Bariumchlorid-Dihydrat in einer Menge von 0,003 bis 0,005 Molen pro Mol Lanthanchlorid zur ersten Lösung;
(4) gleichzeitige Zugabe von:

   (i) einer 0,095 molaren Aluminiumsulfatlösung derart, daß das Zugabeverhältnis bei 0,0007 bis 0,001 Molen pro Mol Lanthanchlorid in der ersten Lösung liegt und
   (ii) einer 0,275 molaren Lösung von 8-Hydroxychinolin derart, daß das Zugabeverhältnis bei 0,01 bis 0,02 Molen pro Mol Lanthanchlorid in der ersten Lösung liegt;

(5) Zusatz einer 0,757 molaren Lösung von Ammoniumsulfat derart, daß das Zugabeverhältnis bei 0,055 bis 0,075 Molen pro Mol Lanthanionen in der ersten Lösung liegt, unter Ausfällung eines Teiles des Lanthans und der Verunreinigungen;
(6) Verdichten und Abtrennen des erhaltenen Niederschlages in der Lösung;
(7) Wiederholen der Stufen (3)—(6) und
(8) Isolierung einer gereinigten Lanthanverbindung aus der Lösung.